# FASCICULE DE BREVET EUROPEEN

(11) **EP 0 801 628 B1**
(45) Date de publication et mention de la délivrance du brevet: **22.07.1998**
(21) Numéro de dépôt: 96901029.7
(22) Date de dépôt: 08.01.1996
(51) Int. Cl.: B65G 47/53, B65G 17/08, B65G 17/00, B23K 37/047, B23P 21/00, B62D 65/00

(54) **DISPOSITIF DE CROISEMENT DE CONVOYEURS A PALETTES ET DISPOSITIF DE CHANGEMENT DE PALETTE POUR CONVOYEUR A PALETTES**
KREUZVORRICHTUNG FÜR PALETTENFÖRDERER UND PALETTENWECHSLER FÜR PALETTENFÖRDERER
PLATE CONVEYOR INTERSECTION DEVICE AND PLATE CHANGING DEVICE FOR A PLATE CONVEYOR

(30) Priorité: 10.01.1995 FR 9500197
(43) Date de publication de la demande: 22.10.1997
(73) Titulaire: ABB PRECIFLEX SYSTEMS, 95250 Beauchamp (FR)
(72) Inventeur: BIDAUD, Daniel, F-95150 Taverny (FR)
(74) Mandataire: Robert, Jean-Pierre
(86) Numéro de dépôt international: FR9600026
(87) Numéro de publication internationale: WO9621611

(56) Documents cités:
- EP-A- 0 474 514
- GB-A- 2 260 717
- US-A- 3 451 526
- US-A- 3 622 043

## Description

La présente invention concerne un dispositif de croisement de convoyeurs à palettes, en particulier de convoyeurs utilisés dans un atelier de production. Elle concerne également un dispositif de changement de palette pour un convoyeur à palettes, mettant en oeuvre le dispositif de croisement précité.

Dans un atelier de production, par exemple d'ensembles de tôlerie, les postes de travail sont de plus en plus souvent répartis en îlots de fabrication qui réalisent des opérations de mise en géométrie et d'assemblage sur un sous-ensemble en cours d'élaboration. Pour constituer des sous-ensembles ou des ensembles, les pièces à assembler sont mises en place sur des supports qui peuvent être de différents types. Lorsque ces supports sont volumineux et spécifiques à une série d'opérations d'assemblage donnée, ils sont appelés palettes. Ces palettes sont attachées à un îlot donné et seules les pièces circulent d'îlot en îlot. Pour le transport des palettes au sein d'un îlot, on utilise souvent des convoyeurs à palettes assurant la desserte des différents postes de travail. Parfois, il peut être utile de réaliser un ou plusieurs croisements de convoyeurs pour la desserte des différents postes de travail et/ou l'introduction ou le retrait d'une ou plusieurs palettes sur un convoyeur principal. On obtient alors des croisements constitués par une partie centrale à laquelle se raccordent différentes portions de voies de convoyeurs généralement perpendiculaires les unes aux autres. L'aiguillage des palettes sur les différentes portions de voies réclame la mise en place d'un dispositif de croisement particulier qui constitue le premier objet de la présente invention.

Plus particulièrement, dans les ateliers modernes, chaque îlot doit pouvoir s'adapter à la réalisation de différents types de sous-ensembles ou ensembles, de sorte que chaque îlot possède différentes palettes adaptées aux différents types de sous-ensembles se présentant à l'entrée de l'îlot de travail. Afin de permettre la mise en place d'une palette déterminée sur un convoyeur, on utilise actuellement un magasin de palettes disposé transversalement au convoyeur. Ce magasin est généralement réalisé sous la forme d'un chariot ou transbordeur ayant un axe de translation sensiblement perpendiculaire à la direction du convoyeur. Ce transbordeur est associé à un organe de commande moteur qui lui permet de se déplacer transversalement pour placer la palette adéquate sur le convoyeur. Ce dernier est lui-même pourvu de moyens d'entraînement de la palette qui peuvent par exemple être constitués par un chariot auto-moteur comportant des moyens pour son accrochage à la palette sélectionnée et des moyens pour son guidage et son pilotage en translation le long de la voie principale, en vue de placer la palette aux différentes positions associées aux différents postes de travail de l'îlot.

Toutefois, dans ce genre de dispositif, la masse du transbordeur et des palettes qu'il déplace impose la mise en oeuvre d'une motorisation puissante et donc coûteuse. De plus, cette masse élevée est à l'origine d'une inertie de fonctionnement qui augmente les temps de réponse du transbordeur aux ordres qui lui sont transmis, ce que ralentit le processus de changement de palette.

Il est donc apparu utile de concevoir un dispositif de changement de palette de structure plus simple et dont les parties mobiles sont de plus faible inertie. L'invention a ainsi également pour objet un dispositif de changement de palettes pour un convoyeur à palettes.

L'invention a donc pour premier objet un dispositif de croisement de convoyeurs à palettes, comportant une partie centrale et des portions de convoyeurs raccordées à la partie centrale, chacune de ces portions de convoyeurs comprenant une voie de circulation pour supporter les palettes et des moyens d'entraînement de ces palettes le long de cette voie de circulation. Selon l'invention, les voies de circulation d'au moins deux des portions de convoyeurs sont disposées à des altitudes différentes, la partie centrale possède des moyens de levage pour déplacer verticalement une palette située sur cette partie centrale entre des altitudes correspondant aux différentes altitudes des voies de circulation des portions de convoyeurs, et cette palette possède des moyens d'accrochage périphériques agencés en regard d'au moins une des portions de convoyeurs, engageables et désengageables lors d'un déplacement vertical de cette palette provoqué par les moyens de levage précités avec des moyens d'accrochages homologues associés à cette portion de convoyeur.

Ainsi, lorsque les moyens de levage sont actionnés pour déplacer la palette située sur la partie centrale d'une altitude initiale à une altitude finale les moyens d'accrochage périphériques de cette palette sont automatiquement engagés avec les moyens d'accrochage homologues associés à la portion de convoyeur dont l'altitude correspond à l'altitude finale de la palette, et sont simultanément désengagés des moyens d'accrochages homologues associés à la portion de convoyeur dont l'altitude correspond à l'altitude initiale de la palette. On comprend que les moyens d'accrochage homologues peuvent être associés directement ou indirectement à la portion de convoyeur correspondante. Plus précisément, ces organes d'accrochage homologues pourront être portés, soit par une palette située sur la portion de convoyeur à laquelle ils sont associés, soit directement par les moyens d'entraînement de cette portion de convoyeur en étant solidaires d'un chariot coulissant parallèlement à la voie de circulation de cette portion de convoyeur.

Avantageusement, les moyens d'accrochage sont des crochets du type à coopération de forme.

Selon un mode d'exécution particulier, le dispositif comporte deux portions de convoyeurs principaux dont les voies de circulation s'étendent à une même altitude selon une direction principale de part et d'autre de la partie centrale et au moins une portion de convoyeur secondaire dont la voie de circulation s'étend à une altitude différente selon une direction secondaire sensiblement perpendiculaire à la direction principale.

Avantageusement alors, les voies de circulation des portions de convoyeurs principaux sont situées à une altitude inférieure à celle de la voie de circulation de la portion de convoyeur secondaire.

Avantageusement encore, le dispositif comporte deux portions de convoyeurs secondaires dont les voies de circulation s'étendent à une même altitude selon la direction secondaire de part et d'autre de la partie centrale.

Plus précisément, la partie centrale comporte une portion centrale de convoyeur principal ayant une voie de circulation fixe reliant les voies de circulation des deux portions de convoyeurs principaux, de telle sorte que ces trois portions forment une portion continue de convoyeur principal, et une portion centrale de convoyeur secondaire ayant une voie de circulation mobile verticalement entre une position haute dans laquelle elle s'étend dans le prolongement de la voie de circulation de la portion de convoyeur secondaire et une position basse dans laquelle elle autorise la circulation d'une palette sur la voie de circulation de la portion centrale de convoyeur principal.

Avantageusement alors, les portions de convoyeurs principaux forment un convoyeur principal, ce convoyeur possédant des moyens d'entraînements qui comportent un chariot monté pour coulisser sur une glissière parallèle à la voie de circulation du convoyeur principal et équipé de moyens escamotables d'attelage à une palette portée par la voie de circulation du convoyeur principal.

L'invention a également pour objet un dispositif de changement de palette pour convoyeur à palettes, comportant un dispositif de croisement selon l'invention, dans lequel les portions de convoyeurs secondaires forment des voies de stationnement pour les palettes.

Il est ainsi possible de placer une ou plusieurs palettes en enfilade sur les voies de stationnement formées par les portions de convoyeurs secondaires tout en conservant une palette ou un train de palettes mobiles sur le convoyeur principal. Pour remplacer une palette située sur le convoyeur principal par une palette en stationnement sur l'une des portions de convoyeurs secondaires, on déplace, grâce aux moyens d'entraînement associés au convoyeur principal, la palette que l'on souhaite remplacer pour positionner celle-ci sur une des portions de ce convoyeur adjacentes à la partie centrale. On place les moyens de levage dans une position dont l'altitude correspond à celle de la portion de convoyeur secondaire sur laquelle est située la palette de remplacement. On actionne les moyens d'entraînement de cette portion, de telle sorte que la palette vienne se placer sur la partie centrale. On place les moyens de levage dans une position dont l'altitude correspond à celle du convoyeur principal. Lors de ce déplacement vertical, les moyens d'accrochage périphériques de cette palette qui sont associés à la portion de convoyeur principal sur laquelle est disposée la palette à remplacer sont engagés avec les moyens d'accrochage périphériques correspondants de cette palette à remplacer. Les moyens d'entraînement des portions de convoyeurs principaux déplacent alors les deux palettes ainsi attelées, de sorte que la palette à remplacer vient se placer sur la partie centrale, tandis que la palette de remplacement vient se placer sur une autre portion de convoyeur principal adjacente à la partie centrale. Les moyens de levage, et donc la palette à remplacer, sont placés à l'altitude correspondant à la portion de convoyeur secondaire sur laquelle on souhaite faire stationner cette palette. Les moyens d'accrochage périphériques de cette palette sont désengagés des moyens d'accrochage périphériques correspondants de la palette de remplacement. Les moyens d'entraînement de la portion de convoyeur secondaire entraînent la palette à remplacer sur cette portion jusqu'à une position de stationnement dans laquelle est entièrement dégagée de la partie centrale. On a ainsi réalisé le changement de palettes souhaité.

On notera que les masses déplacées lors de ce changement sont limitées à celles des palettes, et éventuellement, des ensembles et sous-ensembles qu'elles portent, ce qui permet d'utiliser des moyens d'entraînement simples et de puissance beaucoup plus faible que dans le cas du dispositif ancien de transbordeur. De plus, cette limitation des masses déplacées permet d'obtenir des temps de réponse faibles, du fait de la faiblesse des inerties exercées sur les moyens d'entraînement, et donc de réduire la durée d'un changement de palette.

D'autres caractéristiques et avantages de l'invention apparaîtront à la lecture de la description qui suit de modes de réalisation particuliers et non limitatifs en liaison avec les figures en annexe, parmi lesquelles :
- les figures 1 à 4 sont des vues schématiques en perspective d'un dispositif de croisement de convoyeurs à palettes selon l'invention, illustrant à titre d'exemple les étapes successives d'un croisement de palettes ;
- la figure 5 est une vue en perspective illustrant un mode de réalisation perfectionné d'un dispositif de croisement de convoyeurs à palettes selon l'invention, adapté à la réalisation d'un dispositif de changement de palettes pour convoyeur à palettes conforme à l'invention.

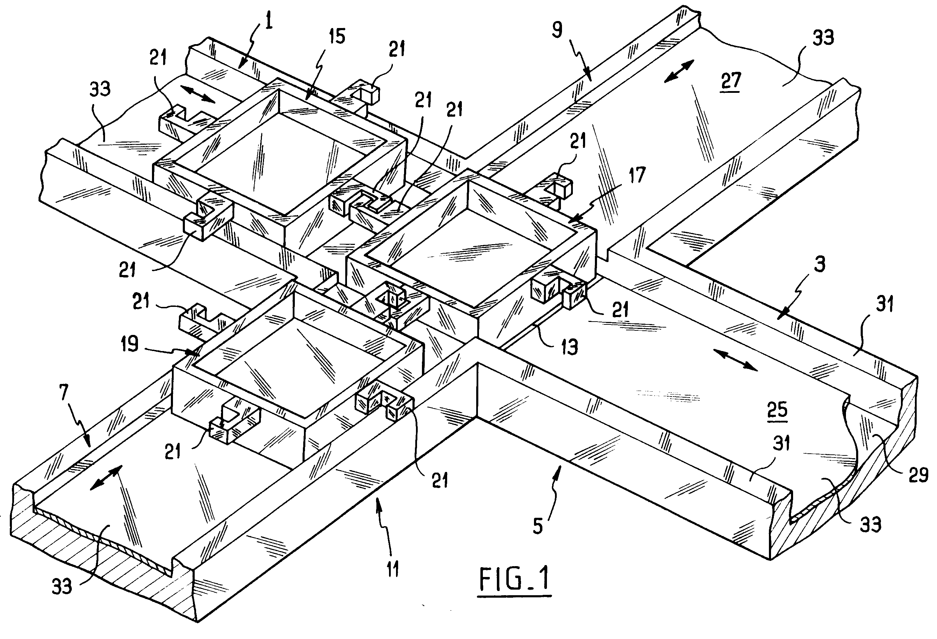

Aux figures 1 à 4, on a représenté un dispositif de croisement de deux convoyeurs à palettes conforme à l'invention. On distingue deux portions de convoyeurs principaux 1 et 3 d'un convoyeur principal 5 s'étendant selon une direction principale, et deux portions de convoyeurs secondaires 7, 9 d'un convoyeur secondaire 11 s'étendant selon une direction secondaire sensiblement perpendiculaire à la direction principale. Les portions 1, 3, 7, 9 sont raccordées à une partie centrale 13 qui est donc située à l'intersection des convoyeurs 5 et 11. Trois palettes 15, 17, 19 sont, dans la configuration de la figure 1, disposées respectivement sur la portion de convoyeur 1, la partie centrale 13 et la portion de convoyeur 7.

Chacune des portions 1, 3, 7 et 9 comporte une voie de circulation, référencée en 25 pour le convoyeur 5 et en 27 pour le convoyeur 11, pour supporter les palettes et des moyens d'entraînement de ces palettes le long de cette voie de circulation. Dans l'exemple illustré, chaque voie de circulation 25, 27 comporte un plateau de support 29 border par deux bordures longitudinales de guidage 31. Les moyens d'entraînement des palettes sont réalisés sous la forme d'un tapis roulant 33 recouvrant le plateau 29.

Selon une caractéristique essentielle de l'invention, la voie de circulation 25 du convoyeur 5 s'étend à une altitude qui est différente de celle de la voie de circulation 27 du convoyeur 11. Plus précisément, l'altitude de la voie 25 est sensiblement plus petite que l'altitude de la voie 27. De plus, la partie centrale 13 est mobile entre une position basse dans laquelle elle s'étend à la même altitude que la voie 25 et une position haute dans laquelle elle s'étend à la même altitude que la voie 27. Cette partie centrale forme ainsi un moyen de levage pour déplacer verticalement une palette située sur cette partie centrale (palette 17 dans la configuration de la figure 1) entre deux altitudes correspondant aux altitudes des voies 25 et 27.

Selon une autre caractéristique essentielle de l'invention, les palettes 15, 17, 19 possèdent des moyens d'accrochage périphériques 21 agencés, lorsque la palette est située sur la partie centrale 13, en regard des portions de convoyeurs 1, 3, 7, 9. Ces moyens d'accrochage périphériques sont engageables et désengageables avec des moyens d'accrochage homologues d'une palette située sur une des portions de convoyeurs, lors d'un déplacement vertical de la palette avec la partie centrale 13. Plus précisément, ces moyens d'accrochage sont agencés de telle sorte que les moyens d'accrochage d'une palette située sur la partie centrale 13 (palette 17 dans la configuration de la figure 1) soient engagés avec les moyens d'accrochage d'une palette située sur une voie de circulation dont l'altitude est la même que celle de la partie centrale 13, et sont désengagés des moyens d'accrochage d'une palette située sur une voie de circulation d'altitude différente. En l'espèce, les moyens d'accrochage 21 sont constitués par des crochets en forme de U dont les branches s'étendent horizontalement.

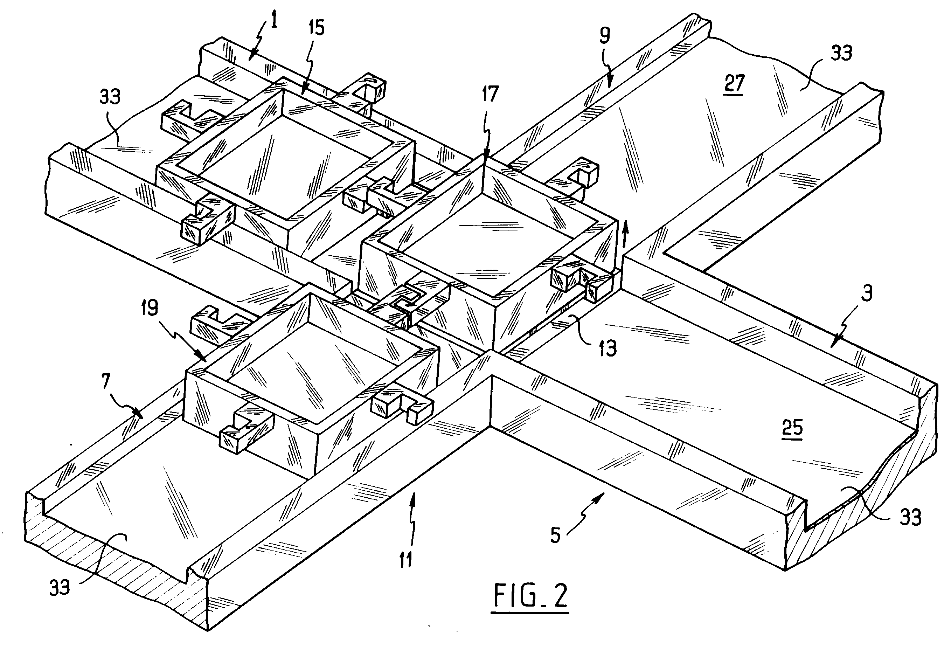

Ainsi, dans la configuration de la figure 1, la partie centrale 13 est en position basse, c'est-à-dire à la même altitude que la voie 25 les portions 1 et 3 du convoyeur 5. Le crochet 21 en regard de la portion 1 est donc engagé avec le crochet 21 correspondant de la palette 15, tandis que le crochet 21 de la palette 17 en regard de la portion 7 est désengagé du crochet correspondant de la palette 19. A l'inverse, dans la configuration de la figure 2, la partie centrale 13 est en position haute, c'est-à-dire qu'elle s'étend à une altitude identique à celle de la voie 27 du convoyeur 11. Dans ce cas, le crochet 21 de la palette 17 en regard de la portion 7 est engagé avec le crochet 21 correspondant de la palette 19, tandis que le crochet 21 de la palette 17 en regard de la portion 1 est désengagé du crochet 21 correspondants de la palette 15.

Pour faciliter la compréhension du fonctionnement du dispositif selon l'invention, on a illustré à titre d'exemple aux figures 1 à 4 les différentes étapes permettant de faire passer la palette 17 sur la portion 9 du convoyeur secondaire 11 et la palette 19 sur le convoyeur principal 5. L'étape initiale est illustrée a la figure 1. Les palettes 15 et 17 sont toutes deux disposées sur le convoyeur principal 5 et sont attelées l'une à l'autre par leurs crochets 21, la partie centrale 13 étant en position basse. La palette 19 est disposée sur la portion 7 du convoyeur secondaire 11 en position d'attente.

Comme illustré par la figure 2, la partie centrale 13 est actionnée pour venir dans sa position haute et placer ainsi la palette 17 à l'altitude de la voie 27 du convoyeur secondaire 11. Lors de cette élévation de la palette 17, le crochet 21 de la palette 17 qui est situé en regard de la palette 15 se désengage du crochet 21 correspondant de cette palette. A l'inverse, le crochet 21 de la palette 17 qui est situé en regard de la palette 19 s'engage avec le crochet 21 correspondant de cette palette. Ainsi, dans la configuration de la figure 2, la palette 17 est entièrement désolidarisée de la palette 15 et est attelée à la palette 19.

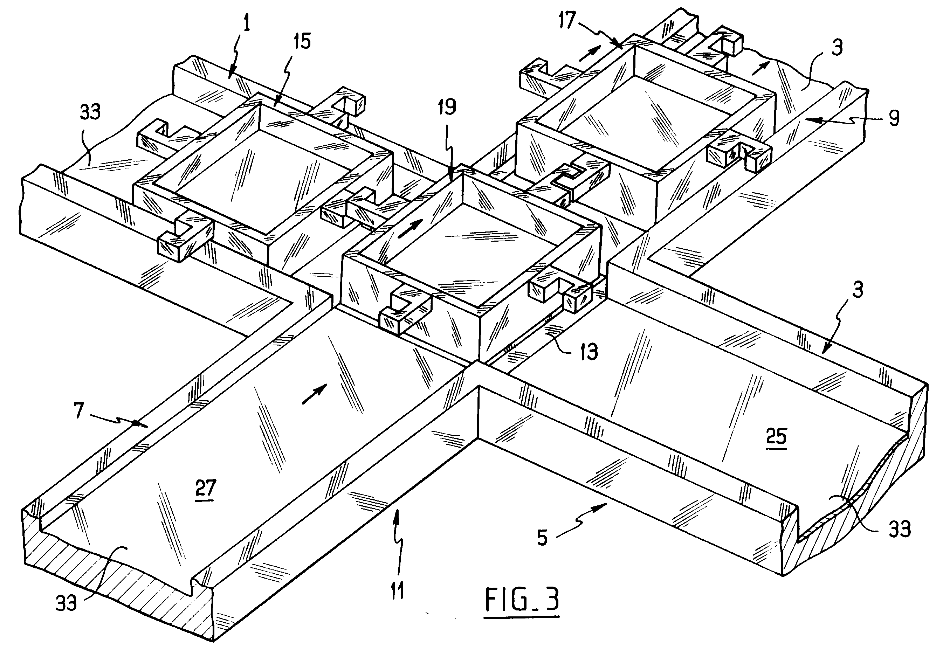

Comme illustré à la figure 3, le tapis roulant 33 de la portion 7 entraîne la palette 19 en direction de la partie centrale 13. La palette 17 est poussée par la palette 19 sur la portion 9 et est à son tour entraînée par le tapis roulant 33 de cette portion pour venir se placer entièrement sur la portion 9. Lorsque la palette 19 repose entièrement sur la partie centrale 13, les tapis roulants 33 des portions 7 et 9 sont immobilisés.

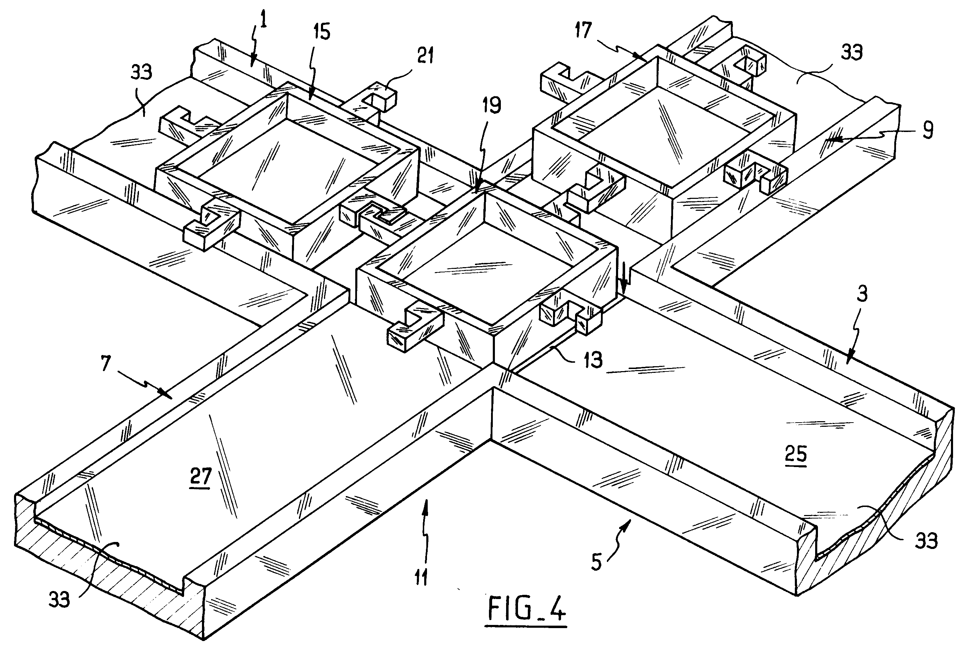

Enfin, comme illustré par la figure 4, la partie centrale 13 est actionnée pour revenir dans sa position basse, de sorte que le crochet 21 de la palette 19 qui se trouve en regard de la palette 17 est désengagé du crochet 21 correspondant à cette palette et le crochet 21 de la palette 19 qui se trouve en regard de la palette 15 est engagé avec le crochet 21 correspondant de cette palette. La palette 19 est alors attelée à la palette 15 et peut donc circuler avec celle-ci sur la voie 25 du convoyeur principal 5.

L'exemple de déplacement donné ci-dessus n'est bien entendu pas limitatif et l'on pourra réaliser tout autre type de déplacement avec croisement.

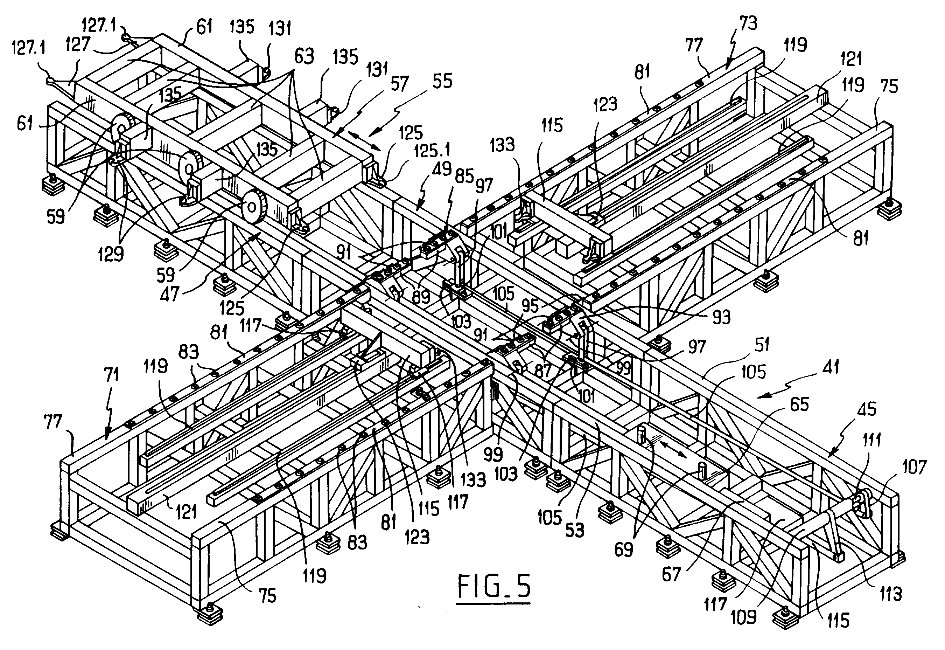

A la figure 5, on a représenté un mode d'exécution plus perfectionné du dispositif de croisement, adapté à la réalisation d'un dispositif de changement de palette pour un convoyeur à palettes du type utilisé dans un atelier d'assemblage, notamment un atelier d'assemblage pour pièces de tôlerie. Ce dispositif comporte un convoyeur principal 41 destiné à desservir différents postes de travail (non représentés) et comportant trois portions de convoyeur, dont deux portions d'extrémité 45 et 47 et une portion centrale 49. Ces trois portions comportent une voie de circulation commune qui est réalisée sous la forme de deux rails 51, 53 portés par une structure en treillis métallique classique qui ne sera pas davantage décrite. Les rails 51, 53 des trois portions 45, 47, 49 sont raccordés les uns aux autres pour former deux rails continus que l'on a désigné par les mêmes références 51, 53 afin de ne pas alourdir la figure.

Une palette 55 est portée par les rails 51, 53 du convoyeur 41. Cette palette 55 comporte un châssis 57 monté sur des roues 59 qui sont en appui sur les rails 51, 53. En l'espèce, le châssis 57 est réalisé sous la forme d'un assemblage de poutres comprenant deux montants parallèles 61 et une série de barreaux transversaux 63. Les roues 59 sont au nombre de six et sont fixées par trois sur chacun des montants 61.

Le convoyeur 41 est équipé d'un moyen d'entraînement de la palette 55 qui commande le déplacement de cette palette sur les rails 51, 53. En l'espèce, ce moyen d'entraînement est réalisé sous la forme d'un chariot 65 qui est monté pour coulisser sur une glissière longitudinale 67. Ce chariot 65 est ici représenté dans une position éloignée de la palette 55 pour une meilleur lisibilité de la figure. Mais, en service, ce chariot est situé sous la palette 55 pour assurer l'entraînement de celle-ci sur le convoyeur 41. En l'espèce, le chariot 65 comporte, pour son attelage à la palette 55, des moyens d'attelage escamotables qui sont ici réalisés sous la forme de deux doigts 69 mobiles entre une position sortie dans laquelle ils pénétrent, lorsque le chariot 65 est situé en-dessous de la palette 55, dans des logements associés (non représentés) ménagés dans deux des barreaux transversaux 63, pour réaliser l'attelage du chariot 65 à la palette 55, et une position rentrée dans laquelle le chariot 65 peut coulisser sur la glissière 67 indépendamment de la palette 55.

Le dispositif comporte en outre deux portions de convoyeurs secondaires 71 et 73 qui sont raccordées en regard l'une de l'autre à la portion centrale 49 du convoyeur 41. Ces deux portions de convoyeurs sont ici identiques et comportent chacune une voie de circulation réalisé sous la forme de deux rails 75, 77 sensiblement perpendiculaires aux rails 51, 53 du convoyeur principal 41 et montés sur une structure porteuse en treillis métallique classique qui ne sera pas davantage décrite. Les rails 75 et 77 sont en outre équipés de plaques de roulement 81 qui comportent une pluralité de roulements 83 destinés à assurer le glissement d'une palette telle que 55 sur les rails 75, 77.

Conformément à une caractéristique essentielle de l'invention, les rails 75, 77 s'étendent dans un plan situé à une altitude différente de celle des rails 51, 53 du convoyeur 41. En l'espèce, l'altitude des rails 75, 77 est sensiblement supérieure à l'altitude des rails 51, 53.

Le dispositif comporte en outre une portion centrale de convoyeur secondaire 85 disposée entre les portions de convoyeurs secondaires 71 et 73 et comprenant une voie de circulation mobile verticalement entre une position haute dans laquelle elle s'étend à une même altitude que les rails 75, 77 des portions de convoyeurs secondaires 71 et 73, et une position basse dans laquelle elle s'étend à une altitude inférieure à celle des rails 51, 53 du convoyeur principal, pour permettre la circulation de la palette 55 sur la portion centrale 49 du convoyeur 41. La voie de circulation de la portion 85 est ici constituée par quatre tronçons de rails, dont deux tronçons 87 sont disposés, en position haute, dans le prolongement des rails 75 des portions 71 et 73 et dont deux tronçons 89 sont situés en position haute, dans le prolongement des rails 77 des portions 71 et 73. Chaque tronçon de rails 87, 89 est équipé d'une plaque de roulement 91 similaire aux plaques de roulement 81 équipant, les rails des portions 71 et 73. La portion 85 et la portion 49 du convoyeur principal 41 forment une partie centrale de croisement.

Dans l'exemple illustré, le déplacement vertical de la portion centrale 85 est assuré au moyen d'un mécanisme de levage. Ce mécanisme comprend, pour chaque tronçon de rail 87, 89, un support pivotant 93 qui est monté sur la structure porteuse du convoyeur 41 pour pivoter autour d'un axe 95 sensiblement perpendiculaire à la direction générale de ce convoyeur. Le support pivotant 95 est par ailleurs articulé à une biellette 97 autour d'un axe 99 parallèle à et distant de l'axe 95. Cette biellette 97 s'étend vers le bas et comporte, à son extrémité inférieure, un coulisseau 101 qui est monté pour coulisser sur une glissière 103 solidaire de la structure porteuse du convoyeur 41 sensiblement parallèle à la direction de ce convoyeur. Ces extrémités des biellettes 97 sont de plus reliées deux à deux par une tige 105. Cette tige est articulée par chacune de ses extrémités aux extrémités des biellettes 97 qui sont associées aux tronçons de rails 87 et 89 adjacents à une même portion secondaire 71, 73. Le déplacement de chaque paire de coulisseaux 101 reliés par une même tige 105 est commandé par une tringle de manoeuvre 105 qui est articulée, par une de ses extrémités, à l'extrémité inférieure de la biellette 97 associée au troncon de rail 87, et par son autre extrémité à un levier 107 qui est monté pour pivoter sur une barre creuse 109 solidaire de la structure porteuse de la portion 45 du convoyeur 41. Le levier 107 est solidaire en rotation d'un axe 111 monté pour pivoter à l'intérieur de la barre creuse 109 et commandé en rotation par un levier 113, lui-même articulé, par une extrémité opposée, à une tige de manoeuvre 115 d'un organe de commande 117 tel que par exemple un vérin hydraulique ou pneumatique.

Chacune des portions 71 et 73 comporte un moyen d'entraînement de la palette 55. Ce moyen d'entraînement est ici constitué par un chariot coulissant 115 monté sur la portion correspondante pour coulisser selon la direction de cette portion. Le support 115 comporte ici deux coulisseaux 117 montés sur des glissières associées 119 qui assurent le guidage du chariot 115 lors de son coulissement. L'entraînement du chariot 115 est assuré par un organe moteur qui est ici réalisé sous la forme d'un rail d'entraînement 121 sur lequel glisse un patin 123 attelé à un mécanisme d'entraînement telle qu'une chaîne (non visible aux figures) entraînée par un moteur (non visible aux figures) et disposée à l'intérieur du rail 121 ou un vérin pneumatique.

La palette 55 possède en outre des moyens d'accrochage 125, 127, 129, 131 périphériques respectivement disposés, lorsque la palette 55 est située sur la partie centrale, en regard de chacune des portions 45, 47, 71 et 73. Les moyens d'accrochage 125, 127 sont homologues l'un de l'autre et sont engageables et désengageables lors d'un déplacement vertical de la palette portée par les rails 87, 89 avec les moyens d'accrochage correspondants 127, 125 d'une palette adjacente portée par les rails 51, 53 du convoyeur 41. En l'espèce, ces moyens d'accrochage sont réalisés sous la forme de deux crochets fixés sur chacun des montants 61 et agencés pour réaliser un accrochage par coopération de forme. Les crochets 127 présentent ainsi une extrémité 127.1 de forme cylindrique, tandis que les crochets 125 présentent une extrémité 125.1 en forme d'anneau de forme complémentaire, ouvert vers l'extrémité 127.1 des crochets 127.

Les moyens d'accrochage 129, 131 associés aux portions 71 et 73 sont engageables et désengageables lors d'un déplacement vertical de la palette portée par les rails 87, 89 avec des moyens d'accrochage homologues 133 équipant les chariots 115. En l'espèce, les moyens d'accrochage 129 et 131 sont réalisés sous la forme de deux crochets identiques aux crochets 125 et sont montés sur deux poutrelles en saillie 135 solidaires des montants 61 de la palette 55, tandis que les moyens d'accrochage 133 sont réalisés sous la forme de deux crochets identiques aux crochets 127 de la palette 55. En outre, les crochets 129 et 131 de la palette 55 et les crochets 133 des chariots 115 sont agencés de telle sorte que, lorsque la palette 55 est située sur la portion centrale 49 du convoyeur 41 et que la portion centrale 85 est en position basse, les crochets 129 et 131 sont désengagés des crochets 133, et que, lorsque la portion centrale 85 est en position haute et soulève la palette 55 à la hauteur des portions 71, 73, les crochets 129, 131 sont engagés avec les crochets 133 de l'un ou l'autre des chariots 115, comme cela sera mieux expliqué ultérieurement.

A la figure 5, on a seulement représenté la palette qui se trouve sur le convoyeur 41 afin de ne pas surcharger la figure, cette configuration étant bien entendu théorique. En service, le dispositif de changement de palettes est équipé de trois palettes identiques à la palette 55, une palette étant disposée sur le convoyeur 41, tandis que les deux autres palettes sont disposées sur les portions 71 et 73. Les palettes qui se trouvent sur les portions 71 et 73 sont attelées au chariot 115 associé à ces portions par leurs crochets 129, 131 qui sont engagés avec les crochets 113 de ces chariots. Les chariots 115 se trouvent dans une position reculée éloignés du convoyeur 41.

Supposons maintenant que l'on souhaite échanger la palette qui se trouve sur le convoyeur 41 avec la palette qui se trouve sur la portion 71. Pour cela, le chariot 115 pousse la palette à laquelle il était attelé sur les rails 87, 89 de la portion centrale 85 qui ont préalablement été placés en position haute. On notera à ce propos que le fait de prévoir deux crochets 133 coopérant avec les deux crochets 129 associés à la palette permet d'assurer le maintien de la palette selon la direction longitudinale des portions 71, 73, sans qu'il soit nécessaire de prévoir d'autre moyen de guidage de la palette sur ces portions. Les rails 87, 89 de la portion centrale 95 sont ensuite déplacés par le mécanisme de levage pour venir dans leur position basse et placer ainsi la palette qu'ils supportent sur les rails 51, 53 de la portion centrale 49 du convoyeur 41. Lors de cette descente, les crochets 127 de la palette située sur la portion centrale 85 sont engagés avec les crochets 125 de la palette 55 qui est positionnée avec exactitude par le chariot 65 afin de permettre cet engagement selon une direction verticale. Les deux palettes qui se trouvent sur le convoyeur 41 sont ainsi attelées.

Les doigts 69 du chariot 65 sont reployés, de sorte que la liaison de ce chariot avec la palette 55 est rompue. Le chariot 65 coulisse indépendamment de la palette 55 pour venir se placer en-dessous de la palette située sur la portion centrale 49. Les doigts 69 sont déployés et sont engagés à l'intérieur des logements associés (non visibles) des barreaux 63 de la palette pour réaliser un attelage positif du chariot 65 avec cette palette. Le chariot 65 coulisse vers la portion 45 pour amener la palette qui était initialement située sur la portion centrale 49, sur la portion 45 et pour amener la palette 55, qui était initialement située sur la portion 47 sur la portion centrale 49.

Les rails 87, 89 de la portion centrale 85 sont placés par le mécanisme de levage dans leur position haute et soulèvent ainsi la palette 55 pour placer celle-ci à la hauteur des portions 71 et 73. Lors de ce soulèvement, les crochets 125 de cette palette sont désengagés des crochets 127 de la palette située sur la portion de voie 45 du convoyeur 41, tandis que les crochets 129 de la palette 55 sont engagés avec les crochets 133 du chariot 115 associé à la portion 71. La palette 55 est alors attelée au chariot 115 et celui-ci coulisse en s'éloignant du convoyeur 41 pour faire coulisser la palette 55 sur la portion 71. Lorsque le coulissement de la palette 55 est achevé et que celle-ci se trouve entièrement dégagée de la portion centrale 85, les rails 87, 89 de cette portion centrale sont abaissés dans leur position basse. La palette située sur le convoyeur peut ainsi coulisser librement le long de celui-ci.

On pourra remplacer de la même manière la palette située sur le convoyeur 41 par la palette située sur la portion 73.

L'invention n'est pas limitée aux modes de réalisation particuliers qui viennent d'être décrits mais englobe au contraire tout dispositif reprenant, avec des moyens équivalents, les caractéristiques essentielles énoncées ci-dessus.

Bien qu'il ait été décrit un dispositif de changement de palettes pour un convoyeur à palettes, il est bien entendu possible de réaliser un dispositif analogue pour un convoyeur utilisant un support de sous-ensemble ou d'ensemble de pièces d'un autre type. Par exemple, s'il s'agit de supports plus légers tels que des cassettes restant associées aux pièces assemblées tout au long de la confection de l'ensemble à réaliser, il est possible de réaliser un dispositif de chargement de cassettes analogue au dispositif de changement de palettes décrit précédemment, dans lequel les portions de convoyeurs secondaires sont utilisées pour alimenter le convoyeur en différents types de cassettes. Les portions de convoyeurs secondaires sont alors équipées, à leurs extrémités opposées au convoyeur, d'un système d'alimentation en cassettes, chaque portion de convoyeur secondaire recevant un type de cassette déterminé. Le convoyeur peut alors être alimenté par l'une ou l'autre des portions de convoyeurs secondaires en fonction du type de cassettes souhaité. La cassette ainsi disposée sur le convoyeur peut être récupérée ultérieurement par un dispositif de changement ou de récupération de cassettes disposé en amont du dispositif d'alimentation et de structure analogue.

## Revendications

1. Dispositif de croisement de convoyeurs à palettes, comportant une partie centrale (13 ; 49, 85) et des portions de convoyeurs (1, 3, 7, 9 ; 45, 47, 71, 73) raccordées à la partie centrale (13 ; 49, 85), chacune de ces portions de convoyeurs comprenant une voie de circulation (25; 51, 53, 75, 77) pour supporter les palettes (15, 17, 19; 55) et des moyens d'entraînement (33 ; 65, 115) de ces palettes le long de cette voie de circulation, caractérisé en ce que les voies de circulation (25 ; 51, 53, 75, 77) d'au moins deux des portions de convoyeurs (1, 3, 7, 9 ; 45, 47, 71, 73) sont disposées à des altitudes différentes, en ce que la partie centrale (13 ; 49, 85) possède des moyens de levage (13 ; 85) pour déplacer verticalement une palette (15, 17, 19 ; 55) située sur cette partie centrale entre des altitudes correspondant aux différentes altitudes des voies de circulation (25 ; 51, 53, 75, 77) des portions de convoyeurs (1, 3, 7, 9; 45, 47, 71, 73), et en ce que cette palette possède des moyens d'accrochage périphériques (21 ; 125, 127, 129, 131) agencés en regard d'au moins une des portions de convoyeurs (1, 3, 7, 9 ; 45, 47, 71, 73), engageables et désengageables lors d'un déplacement vertical de cette palette provoqué par les moyens de levage précités avec des moyens d'accrochages homologues (21 ; 125, 127, 133) associés à cette portion de convoyeur.

2. Dispositif de croisement selon la revendication 1, caractérisé en ce que les moyens d'accrochage homologues (21 ; 125, 127) associés à la portion de convoyeur (1, 3, 7, 9 ; 45, 47) en regard de laquelle sont agencés les moyens d'accrochage périphériques (21 ; 125, 127) de la palette (17; 55) sont portés par une palette (15, 19 ; 55) située sur cette portion de convoyeur (1, 3, 7, 9 ; 45, 47).

3. Dispositif de croisement selon l'une des revendications précédentes, caractérisé en ce que les moyens d'accrochage homologues (133) associés à la portion de convoyeur (71, 73) en regard de laquelle sont agencés les moyens d'accrochages périphériques (129, 131) de la palette (55) sont portés par un chariot (115) coulissant parallèlement à la voie de circulation (75, 77) de cette portion de convoyeur.

4. Dispositif de croisement selon l'une des revendications précédentes, caractérisé en ce que les moyens d'accrochage (21 ; 125, 127, 129, 131, 133) sont des crochets du type à coopération de forme.

5. Dispositif de croisement selon l'une des revendications précédentes, caractérisé en ce qu'il comporte deux portions de convoyeurs principaux (1, 3; 45, 47) dont les voies de circulation (25 ; 51, 53) s'étendent à une même altitude selon une direction principale de part et d'autre de la partie centrale (13 ; 49, 85) et au moins une portion de convoyeur secondaire (7, 9 ; 71, 73) dont la voie de circulation (27 ; 75, 77) s'étend à une altitude différente selon une direction secondaire sensiblement perpendiculaire à la direction principale.

6. Dispositif de croisement selon la revendication 5, caractérisé en ce que les voies de circulation (25 ; 51, 53) des portions de convoyeurs principaux (1, 3 ; 45, 47) sont situées à une altitude inférieure à celle de la voie de circulation (27 ; 75, 77) de la portion de convoyeur secondaire (13 ; 49, 85).

7. Dispositif de croisement selon la revendication 4 ou la revendication 6, caractérisé en ce qu'il comporte deux portions de convoyeurs secondaires (7, 9 ; 71, 73) dont les voies de circulation (27 ; 75, 77) s'étendent à une même altitude selon la direction secondaire de part et d'autre de la partie centrale (13 ; 49, 85).

8. Dispositif de croisement selon la revendication 6, caractérisé en ce que la partie centrale (49, 85) comporte une portion centrale de convoyeur principal (49) ayant une voie de circulation (51, 53) fixe reliant les voies de circulation (51, 53) des deux portions de convoyeurs principaux (45, 47), de telle sorte que ces trois portions forment une portion continue de convoyeur principal (41) et une portion centrale de convoyeur secondaire (85) ayant une voie de circulation (87, 89) mobile verticalement entre une position haute dans laquelle elle s'étend dans le prolongement de la voie de circulation (75, 77) de la portion de convoyeur secondaire (71, 73) et une position basse dans laquelle elle autorise la circulation d'une palette (55) sur la voie de circulation (51, 53) de la portion centrale de convoyeur principal (49).

9. Dispositif de croisement selon la revendication 8, caractérisé en ce que les portions de convoyeurs principaux (45, 47, 49) forment un convoyeur principal (41), ce convoyeur possédant des moyens d'entraînements qui comportent un chariot (65) monté pour coulisser sur une glissière (67) parallèle à la voie de circulation (51, 53) du convoyeur principal (41) et équipé de moyens escamotables d'attelage (69) à une palette (55) portée par la voie de circulation (51, 53) du convoyeur principal (41).

10. Dispositif de changement de palette pour convoyeur à palettes, caractérisé en ce qu'il comporte un dispositif de croisement selon l'une des revendications 5 à 9, dans lequel les portions de convoyeurs secondaires (71, 73) forment des voies de stationnement pour les palettes.

## Claims

1. Pallet conveyor intersection apparatus comprising a central portion (13; 49, 85) and conveyor portions (1, 3, 7, 9; 45, 47, 71, 73) connected to the central portion (13; 49, 85), each of the conveyor portions being provided with a pallet way (25; 51, 53, 75, 77) for supporting pallets (15, 17, 19; 55), and with drive means (33; 65, 115) for driving the pallets along the pallet way, said apparatus being characterized in that the pallet ways (25; 51, 53, 75, 77) of at least two of the conveyor portions (1, 3, 7, 9; 45, 47, 71, 73) are disposed at different levels, in that the central portion (13; 49, 85) is provided with lift means (13; 85) for vertically displacing a pallet (15, 17, 19; 55) situated on the central portion between levels corresponding to the different levels of the pallet ways (25; 51, 53, 75, 77) of the conveyor portions (1, 3, 7, 9; 45, 47, 71, 73), and in that the pallet is provided with peripheral coupling means (21; 125, 127, 129, 131) organized facing at least one of the conveyor portions (1, 3, 7, 9; 45, 47, 71, 73), which means can be engaged with or disengaged from complementary coupling means (21; 125, 127, 133) associated with the facing conveyor portion, by vertically displacing the pallet by means of the above-mentioned lift means.

2. Intersection apparatus according to claim 1, characterized in that the complementary coupling means (21; 125, 127) associated with the conveyor portion (1, 3, 7, 9; 45, 47) facing the peripheral coupling means (21; 125, 127) of the pallet (17; 55) are carried by a pallet (15, 19; 55) situated on said conveyor portion (1, 3, 7, 9; 45, 47).

3. Intersection apparatus according to any preceding claim, characterized in that the complementary coupling means (133) associated with the conveyor portion (71, 73) facing the peripheral coupling means (129, 131) of the pallet (55) are carried by a carriage (115) mounted to slide parallel to the pallet way (75, 77) of said conveyor portion.

4. Intersection apparatus according to any preceding claim, characterized in that the coupling means (21; 125, 127, 129, 131, 133) are hooks of the type having complementary shapes.

5. Intersection apparatus according to any preceding claim, characterized in that it comprises two main conveyor portions (1, 3; 45, 47) whose pallet ways (25; 51, 53) extend at the same level in a main direction on either side of the central portion (13; 49, 85), and at least one secondary conveyor portion (7, 9; 71, 73) whose pallet way (27; 75, 77) extends at a different level in a secondary direction that is substantially perpendicular to the main direction.

6. Intersection apparatus according to claim 5, characterized in that the pallet ways (25; 51, 53) of the main conveyor portions (1, 3; 45, 47) are situated at a level that is lower than the level of the pallet way (27; 75, 77) of the secondary conveyor portion (13; 49, 85).

7. Intersection apparatus according to claim 4 or 6, characterized in that it includes two secondary conveyor portions (7, 9; 71, 73) whose pallet ways (27; 75, 77) extend at the same level in the secondary direction on either side of the central portion (13; 49, 85).

8. Intersection apparatus according to claim 6, characterized in that the central portion (49, 85) comprises a main conveyor central portion (49) having a fixed pallet way (51, 53) interconnecting the pallet ways (51, 53) of the two main conveyor portions (45, 47), so that the three portions form an uninterrupted main conveyor portion (41), and a secondary conveyor central portion (85) having a pallet way (87, 89) that is mounted to move vertically between a high position in which it extends in alignment with the pallet way (75, 77) of the secondary conveyor portion (71, 73), and a low position in which it allows a pallet (55) to travel over the pallet way (51, 53) of the main conveyor central portion (49).

9. Intersection apparatus according to claim 8, characterized in that the main conveyor portions (45, 47, 49) form a main conveyor (41), which conveyor is provided with drive means which comprise a carriage (65) mounted to slide on a runner (67) parallel to the pallet way (51, 53) of the main conveyor (41), and equipped with retractable engagement means (69) for coupling the carriage to a pallet (55) carried by the pallet way (51, 53) of the main conveyor (41).

10. Pallet change-over apparatus for a pallet conveyor, said apparatus being characterized in that it comprises intersection apparatus according to any one of claims 5 to 9, in which the secondary conveyor portions (71, 73) form sidings for parking the pallets.

## Patentansprüche

1. Kreuzvorrichtung für Palettenförderer, umfassend einen Zentralabschnitt (13; 49, 85) und mit dem Zentralabschnitt verbundene Fördererabschnitte (1, 3, 7, 9; 45, 47, 71, 73), von denen jeder eine Laufbahn (25; 51, 53, 75, 77) zum Tragen der Paletten (15, 17, 19; 55) und Mittel (33; 65, 115) für den Antrieb dieser Paletten entlang dieser Laufbahn hat, dadurch **gekennzeichnet**, daß die Laufbahnen (25; 51, 53, 75, 77) mindestens zweier der Fördererabschnitte (1, 3, 7, 9; 45, 47, 71, 73) auf unterschiedlichen Höhen angeordnet sind, daß der Zentralabschnitt (13; 49, 85) eine Hubeinrichtung (13; 85) hat, um eine in diesem Zentralabschnitt befindliche Palette (15, 17, 19; 55) zwischen Niveaus zu verstellen, die den unterschiedlichen Höhen der Laufbahnen (25; 51, 53, 75, 77) der Fördererabschnitte (1, 3, 7, 9; 45, 47, 71, 73) entsprechen, und daß diese Palette an ihrem Umfang Verbindungsmittel (21; 125, 127, 129, 131) hat, die bezüglich mindestens eines der Fördererabschnitte (1, 3, 7, 9; 45, 47, 71, 73) so ausgebildet sind, daß sie bei einer Vertikalverstellung dieser Palette mittels der vorgenannten Hubeinrichtung mit homologen Verbindungsmitteln (21; 125, 127, 133) an diesem Fördererabschnitt in und außer Eingriff treten können.

2. Kreuzvorrichtung nach Anspruch 1, dadurch **gekennzeichnet**, daß die homologen Verbindungsmittel (21; 125, 127), die dem Fördererabschnitt (1, 3, 7, 9; 45, 47) zugeordnet sind, bezüglich dessen die am Umfang der Palette (17; 55) angeordneten Verbindungsmittel (21; 125, 127) ausgebildet sind, von einer Palette (15, 19; 55) gehalten werden, die auf diesem Fördererabschnitt (1, 3, 7, 9; 45, 47) angeordnet ist.

3. Kreuzvorrichtung nach einem der vorangegangenen Ansprüche, dadurch **gekennzeichnet**, daß die homologen Verbindungsmittel (133), die dem Fördererabschnitt (71, 73) zugeordnet sind, bezüglich dessen die am Umfang der Palette (55) angeordneten Verbindungsmittel (129, 131) ausgebildet sind, von einem Wagen (115) gehalten sind, der parallel zu der Laufbahn (75, 77) dieses Fördererabschnittes gleitet.

4. Kreuzvorrichtung nach einem der vorangegangenen Ansprüche, dadurch gekennzeichnet, daß die Verbindungsmittel (21; 125, 127, 129, 131, 133) für einen formschlüssigen Eingriff ausgebildete Haken sind.

5. Kreuzvorrichtung nach einem der vorangegangenen Ansprüche, dadurch **gekennzeichnet**, daß sie zwei Hauptfördererabschnitte (1, 3; 45, 47) hat, deren Laufbahnen (25; 51, 53) sich auf derselben Höhe in einer gemeinsamen Richtung beiderseits des Zentralabschnittes (13; 49, 85) erstrecken, und mindestens einen Nebenfördererabschnitt (7, 9; 71, 73) hat, dessen Laufbahn sich auf einer anderen Höhe in einer Nebenrichtung erstreckt, die im wesentlichen senkrecht zu der Hauptrichtung verläuft.

6. Kreuzvorrichtung nach Anspruch 5, dadurch **gekennzeichnet**, daß die Laufbahnen (25; 51, 53) der Hauptfördererabschnitte (1, 3; 45, 47) auf einer Höhe liegen, die gegenüber der der Laufbahn (27; 75, 77) des Nebenfördererabschnittes (13; 49, 85) geringer ist.

7. Kreuzvorrichtung nach Anspruch 4 oder Anspruch 6, dadurch **gekennzeichnet**, daß sie zwei Nebenfördererabschnitte (7, 9; 71, 73) hat, deren Laufbahnen (27; 75, 77) sich auf derselben Höhe in der Nebenrichtung beiderseits des Zentralabschnittes (13; 49, 85) erstrecken.

8. Kreuzvorrichtung nach Anspruch 6, dadurch **gekennzeichnet**, daß der Zentralabschnitt (49, 85) einen zentralen Abschnitt des Hauptförderers (49) umfaßt, der eine feste Transportbahn (51, 53) hat, welche die Laufbahnen (51, 53) der beiden Hauptfördererabschnitte (45, 47) derart miteinander verbindet, daß die drei Abschnitte einen kontinuierlichen Hauptförderabschnitt (41) bilden, und daß der Zentralabschnitt (49, 85) einen zentralen Abschnitt des Nebenförderers (85) umfaßt, der eine Transportbahn (87, 89) hat, die zwischen einer oberen Stellung, in der sie eine Verlängerung der Umlaufbahn (75, 77) des Nebenfördererabschnittes (71, 73) bildet, und einer unteren Stellung vertikal beweglich ist, in der sie einen Transport einer Palette (55) auf der Transportbahn (51, 53) des zentralen Abschnittes des Hauptförderers (49) ermöglicht.

9. Kreuzvorrichtung nach Anspruch 8, dadurch **gekennzeichnet**, daß die Hauptfördererabschnitte (45, 47, 49) einen Hauptförderer (41) bilden, der Antriebsmittel mit einem Schlitten (65) hat, welcher für eine Gleitbewegung auf einer Gleitbahn (67) gelagert ist, die parallel zu der Laufbahn (51, 53) des Hauptförderers gerichtet ist, und der mit ausfahrbaren Verbindungsmitteln (69) zur Verbindung mit einer Palette (55) ausgerüstet ist, die von der Laufbahn (51, 53) des Hauptförderers (41) getragen wird.

10. Palettenwechselvorrichtung für einen Palettenförderer, dadurch **gekennzeichnet**, daß sie eine Kreuzvorrichtung nach einem der Ansprüche 5 bis 9 hat, bei der die Nebenfördererabschnitte (71, 73) Stationierungsbahnen für die Paletten bilden.
